# FASCICULE DE BREVET EUROPEEN

(11) **EP 2 496 448 B1**
(45) Date de publication et mention de la délivrance du brevet: **19.03.2014**
(21) Numéro de dépôt: 10768236.1
(22) Date de dépôt: 20.10.2010
(51) Int. Cl.: B60R 25/02

(54) **DISPOSITIF ANTIVOL POUR COLONNE DE DIRECTION DE VÉHICULE À SUPER CONDAMNATION ASSURÉE PAR BASCULE INTERMÉDIAIRE**
DIEBSTAHLSICHERUNGSVORRICHTUNG FÜR DIE LENKSÄULE EINES FAHRZEUGS MIT SUPERSPERRUNG DURCH EINEN ZWISCHENSCHWINGARM
ANTITHEFT DEVICE FOR THE STEERING COLUMN OF A VEHICLE HAVING SUPER-LOCKOUT PROVIDED BY AN INTERMEDIATE ROCKER BAR

(30) Priorité: 06.11.2009 FR 0905363
(43) Date de publication de la demande: 12.09.2012
(73) Titulaire: Valeo Securité Habitacle, 94046 Créteil Cedex (FR)
(72) Inventeur: MALTAVERNE, Frédéric, F-94046 Créteil Cedex (FR); PERRIN, Christophe, F-94046 Créteil Cedex (FR)
(86) Numéro de dépôt international: PCT/EP2010/065821
(87) Numéro de publication internationale: WO 2011/054673

(56) Documents cités:
- FR-A1- 2 366 426
- FR-A1- 2 679 504

## Description

L'invention concerne les dispositifs antivol pour colonne de direction de véhicule.

Ces dispositifs qui comprennent généralement le verrou de la clé de contact du véhicule, ont pour fonction de bloquer le mouvement de la colonne lorsque ce mouvement n'est pas autorisé, notamment lorsque la clé de contact du véhicule est absente.

En outre, ils sont fréquemment dotés d'une fonction dite de super condamnation qui vise à maintenir le blocage de la colonne même si un malfaiteur a rompu la partie du dispositif portant le verrou. Un tel dispositif est décrit dans le document FR 2 366 426 A.

Par ailleurs, ces dispositifs doivent être conformes aux normes et aux réglementations en vigueur concernant le choc du genou du conducteur, qui prévoient que le dispositif antivol se casse sous l'effet d'un choc prédéterminé avec le genou du conducteur et ce sans blesser sérieusement ce dernier. C'est la raison pour laquelle le dispositif est généralement pourvu d'une zone fusible qui lui permet de se rompre sous l'effet d'un effort réduit. Dans ces conditions, on cherche à faire en sorte que, si un malfaiteur exerce un effort similaire, la rupture a lieu sans menacer la fonction de super condamnation.

Dans le cadre de tels dispositifs, on cherche à pouvoir disposer les différents élements nécessaires à la fonction de supercondamnation selon une disposition avantageuse en termes d'encombrement tout en veillant à la fiabilité du déclenchement de la supercondamnation.

En effet, cette fonction est déclenchée par une tige mobile sollicitée par un ressort contre la partie du dispositif portant le verrou ou par un attachment direct de la tige sur une partie portant le verrou.

Cette tige doit s'étendre depuis une zone proche du verrou jusqu'à une zone proche d'un pion de supercondamnation, et la coopération entre la tige et le pion est ici visée en tant que nécessitant d'être améliorée dans une telle perspective.

Un but de l'invention est de faciliter le déclenchement de la fonction de super condamnation l'élément de supercondamnation étant disposé sur un côté de la colonne de direction qui est opposé à celui où se trouve le verrou.

A cet effet, on prévoit, selon l'invention, un dispositif antivol pour colonne de direction de véhicule, qui comporte :
- une partie de blocage comprenant un pêne de blocage de colonne de direction, et un organe mobile apte à commander un blocage en position du pêne ;
   et
- une partie d'accès comprenant un verrou
lequel dispositif comporte une bascule pivotante transformant un déplacement de l'organe mobile de commande en une libération d'une pièce de supercondamnation, l'élément de super-condamnation étant situé sur un côté de la colonne de direction qui est opposé au côté où se trouve le verrou.

Le dispositif selon l'invention permet donc de pouvoir implanter la pièce de supercondamnation, par exemple un pion de supercondamnation, dans une zone très éloignée du verrou et donc bien protégée des attaques extérieures.

Cette bascule va autoriser différentes configurations spatiales d'une tige de commande et d'un pion de condamnation, et notamment des configurations où :
- La bascule s'étend selon une direction transversale à une direction de déplacement de l'organe de commande et transversale à une direction de déplacement du pion de super-condamnation.

Le dispositif selon l'invention pourra présenter en outre au moins l'une quelconque des caractéristiques suivantes :
- le dispositif présente un arbre qui transforme une rotation du verrou en un mouvement initiant le déplacement du pêne, lequel arbre présente une encoche latérale et la bascule pivotante est disposée de manière à venir pivoter à l'intérieur de l'encoche lorsqu'elle est basculée en position de déclenchement de la super-condamnation.
- l'encoche de l'arbre qui transforme une rotation du verrou en un mouvement initiant le déplacement du pêne est placée de telle manière que la bascule ne peut pénétrer dans l'encoche que lorsque l'arbre est dans une position ou le verrou est en position de commande de verrouillage de la colonne de direction.
- l'arbre de transformation de la rotation du verrou en un mouvement initiant le déplacement du pêne est placé de manière à ce que le pêne et le pion de super-condamnation sont situés entre l'arbre et la colonne de direction.

L'encoche du vilbrequin permet en outre d'augmenter le débattement angulaire de la bascule pour favoriser encore le déclenchement de la fonction de super condamnation.

On prévoit également selon l'invention un véhicule comprenant un dispositif selon l'invention.

D'autres caractéristiques et avantages de l'invention apparaîtront encore dans la description suivante d'un mode de réalisation et d'une variante donnés à titre d'exemples non limitatifs en référence aux dessins annexés sur lesquels :
- la figure 1 est une vue de biais du dispositif selon un mode de réalisation de l'invention ;
- la figure 2 est une vue partielle du dispositif de la figure 1 ;
- la figure 3 est une vue en coupe transversale du même dispositif ;
- la figure 4 est une vue en coupe et en perspective de certaines pièces de ce même dispositif.

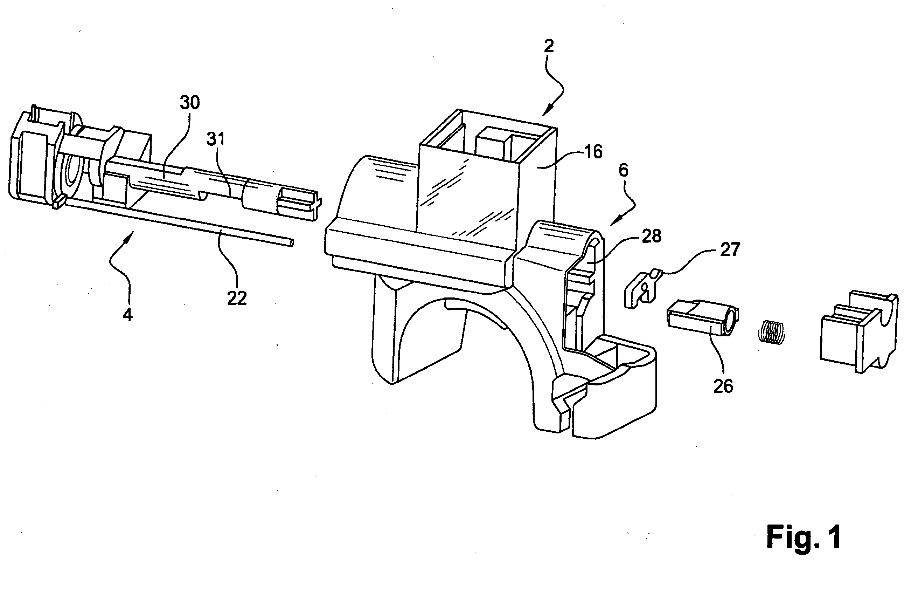

On a illustré aux figures 1 à 4 un mode de réalisation du dispositif antivol selon l'invention pour colonne de direction de véhicule automobile.

Ce dispositif 2 comprend, en l'espèce, deux parties principales que nous appellerons ici respectivement partie d'accès 4 et partie de blocage 6. La partie d'accès 4 comprend notamment un verrou à clé ou dispositif analogue. Lorsque le conducteur du véhicule introduit la clé dans le verrou, il peut faire tourner un rotor de cette dernière pour mettre le véhicule sous tension et en fonctionnement.

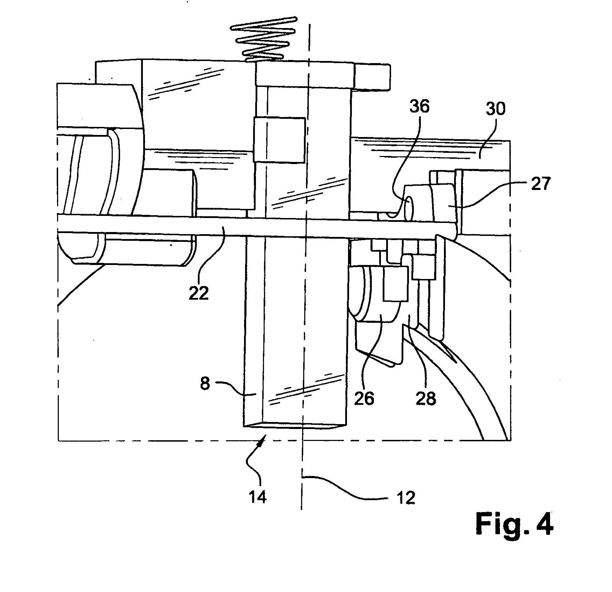

La partie de blocage 6 comprend notamment un pêne 8 visible sur la figure 4 ayant une forme générale de parallélépipède rectangle. Il est monté mobile à coulissement dans un guide-pêne 10 de la partie 6. Le coulissement s'effectue suivant une direction longitudinale 12 du pêne. Lorsqu'il se trouve en position étendue, le pêne, au moyen de son extrémité distale 14, vient en prise avec un organe de la colonne de direction du véhicule pour bloquer la rotation de cette dernière autour de son axe de rotation.

L'actionnement du verrou au moyen de la clé permet de commander la position du pêne et donc le blocage ou le déblocage de la colonne de direction. On se référera notamment pour plus de détails à ce sujet à la demande WO 2008/074726 au nom de la demanderesse.

Le dispositif 2 comprend un boîtier 16 présentant, à une jonction entre les parties d'accès 4 et de blocage 6, une zone d'affaiblissement ou de rupture matérialisée par un amincissement local de l'épaisseur de la paroi du boîtier 16. Cette zone est positionnée de sorte que, si un effort est exercé sur la partie d'accès 4, il est susceptible d'engendrer la rupture du boîtier 16 et du dispositif par séparation de la partie d'accès 4 et de la partie de blocage 6.

La partie de blocage 6 comprend un organe mobile 22, en l'espèce sous la forme d'un coulisseau tel qu'une pige 22 ou aiguille. La pige 22 a la forme générale d'une tige rigide rectiligne s'étendant en l'espèce perpendiculairement à la direction 12. La pige 22 est montée mobile à coulissement dans le boîtier 16.

L'organe mobile 22 s'étend de manière à relier la partie d'accés à la partie de blocage de sorte qu'une séparation entre la partie d'accès et la partie de blocage se traduit par un déplacement de l'organe mobile dans la partie de bocage.

La tige 22 est ici déplacée par le mouvement en séparation de la partie d'accès. A cet effet la tige est ici fixée par son extrémité au verrou et entrainée par ce dernier dans ce cas.

La partie de blocage comprend un pion 26 monté mobile dans un conduit 28 et maintenu en position à une extrémité de ce conduit par un bras de maintien d'une bascule 27. Le dispositif est agencé de sorte que, si la pige 22 sollicitée par le ressort se déplace en direction de la partie d'accès 4 et en direction opposée au pêne, elle libère un bras d'actionnement de la bascule 27 laquelle pivote alors et libére, par l'effacement de son bras opposé appelé ici bras de maintien, le pion 26. Le pion 26, entrainé par ressort, bloque alors en position le pêne 8 lorsqu'il immobilise lui-même la colonne de direction.

La bascule ou levier 27 est montée mobile à pivotement par rapport au boitier 16 autour d'un axe 36. L'axe 36 est parallèle aux directions de l'organe mobile 22 et parallèle à la direction de déplacement du pion de supercondamnation 26, et transversale à la direction de la colonne de direction.

La bascule 27 vient ici s'étendre entre l'organe mobile 22 et le pion 36, en appui latéral contre chacun d'eux, de sorte qu'un éffacement longitudinal de l'organe mobile 22 provoque une libération du bras appuyé contre lui de la bacule, et un éffacement latéral de l'autre bras par rapport au pion de supercondamnation 26.

La bascule 27 s'appuie ici contre le pion 26 au niveau d'un échancrure latérale de celui-ci. Cette échancrure latérale présente une extémité en pente, contre laquelle la bascule 27 vient s'appuyer en position de maintien du pion 27.

Lorsque la bascule est libérée, le bras de maintien de cette dernière glisse contre cette pente en libération du pion. Ainsi, la libération du pion est progressive et sans contact étendu entre ces deux éléments. Grâce à cette pente, formant obstacle étendu devant le bras de maintien de la bascule mais n'offrant qu'une surface de contact limitée entre pion et bascule, on supprime un risque de maintien accidentel du pion par frottement avec la bascule 27.

Le bras de maintien de la bascule présente un côté opposé au côté coopérant avec le pion 26 une surface en contact avec un arbre ou vilbrequin 30.

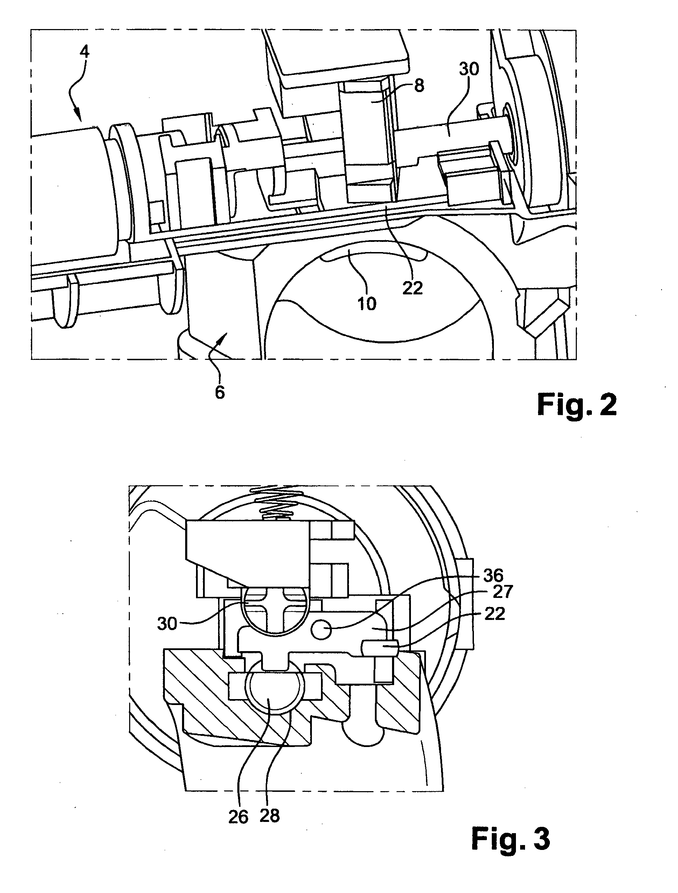

Le vilbrequin 30 transforme un mouvement de rotation du verrou, représenté partiellement en partie gauche de la figure 2, et un mouvement d'initiation du déplacement du pêne 8. En outre, cet arbre 30 transmet la rotation du verrou sur un commutateur rotatif représenté sur la droite de la figure 2. L'arbre 30 est donc positionné de manière à relier pour des raisons de fonctionnement deux côtés opposés de la colonne de direction, en recouvrement d'une partie du boitier contenant le pêne 8 et l'élément de supercondamnation 26.

L'arbre 30 présente une encoche 31 qui vient en regard de la bascule 27 dans une orientation de l'arbre 30 correspondant à la position verrouillée de la colonne de direction. Cette encoche 30 s'offre alors à la pénétration dans celle-ci de la bascule 27 si cette dernière est libérée par l'organe mobile 22.

Dans les autre orientation de l'arbre 30, le côté de la bascule en vis-à-vis de l'arbre présente une concavité circulaire pour épouser le contour de l'arbre 30.

Ainsi donc, dans la configuration de supercondamnation de l'ensemble, la bascule 27 non seulement libère le pion de supercondamnation, et plus genéralement la pièce de supercondamnation qui peut elle-même être une bascule, et pénètre en outre dans l'arbre 30 pour interdire un déplacement longitudinal de ce dernier.

Le positionnement de l'arbre 30 en recouvrement du pêne et de l'élément de supercondamnation et son verrouillage en place par la bascule 27 confère alors à l'arbre 30 une fonction de barrière contre l'accès d'un malfaiteur au pêne 8 et à son élément de supercondamnation 26.

## Revendications

1. Dispositif antivol pour colonne de direction de véhicule, qui comporte :
- une partie de blocage (6) comprenant un pêne (8) de blocage de colonne de direction, et un organe mobile (22) apte à commander un blocage en position du pêne ; et
- une partie d'accès comprenant un verrou ;
lequel dispositif comporte une bascule (27) transformant un déplacement de l'organe mobile de commande (22) en une libération d'un élément de super-condamnation (26), **caractérisé en ce que** l'élément de super-condamnation (26) est situé sur une côté de la colonne de direction qui est opposé au côté où se trouve le verrou.

2. Dispositif selon la revendication 1, **caractérisé en ce que** la bascule (27) s'étend selon une direction transversale à une direction de déplacement de l'organe de commande (22) et transversale à une direction de déplacement de l'élement de super-condamnation.

3. Dispositif selon l'une quelconque des revendications précédentes, **caractérisé en ce qu'**il présente un arbre (30) qui transforme une rotation du verrou en un mouvement initiant le déplacement du pêne (8), lequel arbre présente une encoche latérale (31) et la bascule pivotante est disposée de manière à venir pivoter à l'intérieur de l'encoche lorsqu'elle est basculée en position de déclenchement de la super-condamnation.

4. Dispositif selon l'une quelconque des revendications précédentes, **caractérisé en ce que** l'encoche de l'arbre qui transforme une rotation du verrou en un mouvement initiant le déplacement du pêne est placée de telle manière que la bascule (27) ne peut pénétrer dans l'encoche (31) que lorsque l'arbre est dans une position ou le verrou est en position de commande de verrouillage de la colonne de direction.

5. Dispositif selon l'une quelconque des revendications précédentes, **caractérisé en ce que** l'arbre de transformation de la rotation du verrou en un mouvement initiant le déplacement du pêne (8) est placé de manière à ce que le pêne et l'élément de super-condamnation sont situés entre l'arbre (30) et la colonne de direction.

6. Dispositif selon l'une quelconque des revendications précédentes, **caractérisé en ce que** l'élément de supercondamnation est un pion coulissant (26) et **en ce que** la bascule (27) vient en contact latéral avec ce pion coulissant.

7. Dispositif selon la revendication précédente, **caractérisé en ce que** le pion coulissant présente une pente oblique par rapport à sa direction de coulissement, laquelle pente oblique est en contact avec la bascule (27).

8. Dispositif selon l'une quelconque des revendications précédentes, **caractérisé en ce que** l'organe mobile (22) est une tige coulissante, l'élément de maintien est un pion coulissant (26), la tige et le pion ayant des directions de coulissement parallèles et la bascule (27) s'étend transversalement à la tige et au pion, la bascule présentant deux bras en vis-à-vis latéral respectivement avec la tige et le pion.

9. Véhicule **caractérisé en ce qu'**il comprend un dispositif (2) selon l'une quelconque des revendications précédentes.

## Patentansprüche

1. Diebstahlsicherungsvorrichtung für die Lenksäule eines Fahrzeugs, die aufweist:
- einen Blockierteil (6), der einen Riegel (8) zum Blockieren der Lenksäule und ein bewegliches Organ (22) enthält, das eine Positionsblockierung des Riegels steuern kann; und
- einen Zugangsteil, der ein Schloss enthält; wobei die Vorrichtung eine eine Verschiebung des beweglichen Steuerorgans (22) in eine Freigabe eines Superverriegelungselements (26) umwandelnde Kippvorrichtung (27) aufweist, **dadurch gekennzeichnet, dass** das Superverriegelungselement (26) sich auf einer Seite der Lenksäule befindet, die der Seite gegenüberliegt, auf der sich das Schloss befindet.

2. Vorrichtung nach Anspruch 1, **dadurch gekennzeichnet, dass** die Kippvorrichtung (27) sich in einer Querrichtung zu einer Verschieberichtung des Steuerorgans (22) und quer zu einer Verschieberichtung des Superverriegelungselements erstreckt.

3. Vorrichtung nach einem der vorhergehenden Ansprüche, **dadurch gekennzeichnet, dass** sie eine Welle (30) aufweist, die eine Drehung des Schlosses in eine die Verschiebung des Riegels (8) startende Bewegung umwandelt, wobei die Welle eine seitliche Kerbe (31) aufweist und die schwenkende Kippvorrichtung so angeordnet ist, dass sie im Inneren der Kerbe schwenkt, wenn sie in die Auslösestellung der Superverriegelung gekippt wird.

4. Vorrichtung nach einem der vorhergehenden Ansprüche, **dadurch gekennzeichnet, dass** die Kerbe der Welle, die eine Drehung des Schlosses in eine die Verschiebung des Riegels startende Bewegung umwandelt, so angeordnet ist, dass die Kippvorrichtung (27) nur in die Kerbe (31) eindringen kann, wenn die Welle in einer Stellung ist, in der das Schloss in der Stellung der Verriegelungssteuerung der Lenksäule ist.

5. Vorrichtung nach einem der vorhergehenden Ansprüche, **dadurch gekennzeichnet, dass** die Welle zur Umwandlung der Drehung des Schlosses in eine die Verschiebung des Riegels (8) startende Bewegung so angeordnet ist, dass der Riegel und das Superverriegelungselement sich zwischen der Welle (30) und der Lenksäule befinden.

6. Vorrichtung nach einem der vorhergehenden Ansprüche, **dadurch gekennzeichnet, dass** das Superverriegelungselement ein gleitender Flachstift (26) ist, und dass die Kippvorrichtung (27) mit diesem gleitenden Flachstift in seitlichen Kontakt kommt.

7. Vorrichtung nach dem vorhergehenden Anspruch, **dadurch gekennzeichnet, dass** der gleitende Flachstift eine schräge Neigung bezüglich seiner Gleitrichtung aufweist, wobei die schräge Neigung mit der Kippvorrichtung (27) in Kontakt ist.

8. Vorrichtung nach einem der vorhergehenden Ansprüche, **dadurch gekennzeichnet, dass** das bewegliche Organ (22) eine gleitende Stange ist, das Haltelement ein gleitender Flachstift (26) ist, wobei die Stange und der Flachstift parallele Gleitrichtungen haben, und die Kippvorrichtung (27) sich parallel zur Stange und zum Flachstift erstreckt, wobei die Kippvorrichtung zwei Arme aufweist, die der Stange und dem Flachstift seitlich gegenüberliegen.

9. Fahrzeug, **dadurch gekennzeichnet, dass** es eine Vorrichtung (2) nach einem der vorhergehenden Ansprüche enthält.

## Claims

1. Antitheft device for the steering column of a vehicle, comprising:
- a blocking part (6) comprising a bolt (8) for blocking the steering column, and a mobile member (22) capable of controlling blocking in position of the bolt; and
- an access part comprising a lock;
which device comprises a rocker bar (27) converting displacement of the mobile control member (22) into release of a superlocking element (26), **characterized in that** the superlocking element (26) is situated on a side of the steering column opposite to the side where the lock is located.

2. Device according to Claim 1, **characterized in that** the rocker bar (27) extends in a direction transverse to a direction of displacement of the control member (22) and transverse to a direction of displacement of the superlocking element.

3. Device according to any one of the preceding claims, **characterized in that** it has a shaft (30) which converts rotation of the lock into a movement initiating displacement of the bolt (8), which shaft has a lateral notch (31), and the pivoting rocker bar is disposed so as to pivot into the interior of the notch when it is rocked into the position triggering superlocking.

4. Device according to any one of the preceding claims, **characterized in that** the notch in the shaft which converts rotation of the lock into a movement initiating displacement of the bolt is placed such that the rocker bar (27) can enter the notch (31) only when the shaft is in a position or the lock is in a position in which it controls locking of the steering column.

5. Device according to any one of the preceding claims, **characterized in that** the shaft for converting rotation of the lock into a movement initiating displacement of the bolt (8) is placed such that the bolt and the superlocking element are situated between the shaft (30) and the steering column.

6. Device according to any one of the preceding claims, **characterized in that** the superlocking element is a sliding pin (26) and **in that** the rocker bar (27) comes into lateral contact with this sliding pin.

7. Device according to the preceding claim, **characterized in that** the sliding pin has a slope which is oblique relative to its sliding direction, which oblique slope is in contact with the rocker bar (27).

8. Device according to any one of the preceding claims, **characterized in that** the mobile member (22) is a sliding rod, the retaining element is a sliding pin (26), the rod and the pin having parallel sliding directions, and the rocker bar (27) extends transversely to the rod and the pin, the rocker bar having two arms laterally facing the rod and the pin respectively.

9. Vehicle, **characterized in that** it comprises a device (2) according to any one of the preceding claims.
